# EUROPÄISCHE PATENTSCHRIFT

(11) **EP 2 647 865 B1**
(45) Veröffentlichungstag und Bekanntmachung des Hinweises auf die Patenterteilung: **22.05.2019**
(21) Anmeldenummer: 13161681.5
(22) Anmeldetag: 28.03.2013
(51) Int. Cl.: F16D 65/18, F16C 19/46, F16C 19/50, F16D 121/14, F16D 125/28

(54) **Lagerung eines eine teilzylindrische Außenfläche aufweisenden Drehhebels gegenüber einem Druckstück**
Bearing of a crank comprising a partially cylindrical external surface relative to a thrust piece
Logement d'un levier rotatif présentant une surface extérieure partiellement cylindrique par rapport à une pièce de pression

(30) Priorität: 05.04.2012 DE 102012103017
(43) Veröffentlichungstag der Anmeldung: 09.10.2013
(73) Patentinhaber: BPW Bergische Achsen KG, 51674 Wiehl (DE)
(72) Erfinder: Dowe, Günter, 51588 Nümbrecht (DE)
(74) Vertreter: Bungartz Christophersen Partnerschaft mbB Patentanwälte

(56) Entgegenhaltungen:
- EP-A1- 2 312 173
- DE-A1-102005 034 739
- JP-A- 2009 047 275

## Beschreibung

Die Erfindung betrifft eine Übertragungseinrichtung einer Scheibenbremse bestehend aus einem ersten Druckstück in Gestalt eines eine teilzylindrische Fläche und einen verlängerten Hebelarm aufweisenden Drehhebels, einem ebenfalls teilzylindrischen zweiten Druckstück und einer Wälzlagerung für die gegenseitige Abstützung der zwei Druckstücke, wobei kreisbogenförmig gekrümmte, einander unter Zwischenlage von Wälzkörpern radial gegenüberliegende innere und äußere Wälzflächen vorgesehen sind, an denen die Wälzkörper ablaufen, wobei die eine Wälzfläche die teilzylindrische Fläche des Drehhebels ist, wobei die Wälzkörper einzeln oder gruppenweise in einem beweglich gegenüber den Druckstücken angeordneten Wälzlagerkäfig zusammengefasst sind

Lagerungen in Verbindung mit einem einen verlängerten Hebelarm aufweisenden Drehhebel werden bei Scheibenbremsen und insbesondere bei pneumatisch betätigten Scheibenbremsen eingesetzt, um die Kraft eines druckluftbetriebenen Bremszylinders in eine hohe Zuspannkraft gegen die Bremsbeläge zu verstärken. Bekannt sind solche Lagerungen z. B. aus den Druckschriften DE 10 2005 034 739 A1, DE 10 2007 024 787 A1, DE 10 2010 006 262 A1 und EP 2 312 173 A1. Ihnen gemeinsam ist, dass sich das Wälzlager aus einer auf dem Drehhebel befestigten ersten Lagerschale, in einem Wälzlagerkäfig zusammengefassten Wälzkörpern sowie einer zweiten Lagerschale zusammensetzt, die gegen ein Druckstück abgestützt ist, welches die Zuspannkraft in Richtung zu dem nächstgelegenen Bremsbelag der Scheibenbremse überträgt.

Aus der DE 10 2004 031 792 A1 und vor allem der gattungsbildenden DE 102 32 961 A1 sind für denselben Anwendungsbereich auf dem Gebiet der Scheibenbremsen Lagerungen bekannt, die ohne eine separate Lagerschale auf dem Drehhebel auskommen. Vielmehr wälzen die Wälzkörper unmittelbar auf der teilzylindrisch gestalteten Außenfläche des Drehhebels ab, der hierfür eine hohe Bearbeitungsgüte aufweist. Der in Umfangsrichtung mögliche Weg des Wälzlagerkäfigs ist durch Anschläge begrenzt, die sich an der äußeren Lagerschale befinden. Beide Teile, d. h. sowohl der Wälzlagerkäfig als auch die äußere Lagerschale, erfahren bei der Zuspannung gegenüber dem Drehhebel eine Relativbewegung und sind nicht auf dem Drehhebel fixierbar.

Aus der JP 2009 047275 A ist eine zwischen zwei Druckstücken angeordnete Wälzlagerung bekannt, bei der die beiden Wälzflächen, an denen die in einem Wälzlagerkäfig zusammengefassten Wälzkörper abrollen, kreisbogenförmig verlaufen. Die Wälzkörper laufen unmittelbar auf der gekrümmten Außenseite des einen Druckstücks ab, wohingegen die gegenüberliegende Wälzfläche an einer kreisbogenförmig gebogenen Schale ausgebildet ist. Zusätzlich zu der Außenschale und dem Wälzlagerkäfig ist ein rahmenförmig gestaltetes Kulissenelement vorhanden, welches den Wälzlagerkäfig in Umfangsrichtung führt.

Der Erfindung liegt die **Aufgabe** zugrunde, eine Lagerung eines Drehhebels ohne eine am Drehhebel befestigte Lagerschale zu schaffen, die besonders montagefreundlich ist.

Gelöst wird diese Aufgabe durch eine Übertragungseinrichtung mit den Merkmalen des Patentanspruchs 1.

Das Kulissenelement übernimmt damit mindestens zwei Funktionen. Es führt den Wälzlagerkäfig in Umfangs- und damit in Krümmungsrichtung, und es sorgt zugleich durch einen Formschluss dafür dass sich der Wälzlagerkäfig nicht in radialer Richtung aus dem Kulissenelement lösen kann. In einer vorteilhaften Ausgestaltung lässt sich dies erreichen, indem an dem Kulissenelement ausgebildeten Führungen, welche primär der Führung des Wälzlagerkäfigs dienen, diesen zusätzlich übergreifen und so sichern.

Das Kulissenelement ist ein separates Bauteil, welches zu seiner lösbaren Befestigung an dem Drehhebel mit Halteelementen versehen ist. Vorzugsweise sind diese Halteelemente einstückig an den umfangsseitigen Enden des Kulissenelements angeformte Rastnasen, wobei diese Rastnasen Rücksprünge hintergreifen, die sich in Umfangsrichtung an die innere Wälzfläche anschließen.

Hinsichtlich der Führungen wird mit einer Ausgestaltung vorgeschlagen, dass diese einen konvexen Querschnitt aufweisen, und dass der daran jeweils entlanggleitende, korrespondierende Querschnitt an den Seitenrändern des Wälzlagerkäfigs konkav ist. Es kommt auf diese Weise zu einem sicheren Hintergriff, und es ist ausgeschlossen, dass sich der Wälzlagerkäfig in radialer Richtung aus dem umgebenden Kulissenelement löst. Zudem ermöglicht die konvex-konkave Ausgestaltung einen leichten Zusammenbau, bei dem entweder der Wälzlagerkäfig unter kurzfristiger seitlicher Aufweitung des Kulissenraums, oder umgekehrt unter Verengung des Wälzlagerkäfigs radial in das Kulissenelement hineingedrückt wird.

Bei einer bevorzugten Ausgestaltung der Lagerung weist das Kulissenelement zur Aufnahme des Wälzlagerkäfigs einen kreisbogenförmig gekrümmten Kulissenraum auf, der nach radial innen und nach radial außen offen ist, und zu beiden Seiten hin durch Führungen für den Wälzlagerkäfig begrenzt ist.

Mit einer weiteren Ausgestaltung wird vorgeschlagen, dass sich die Wälzkörper nicht an dem Kulissenelement abstützen, das Kulissenelement selbst daher nicht im Kraftfluss liegt. Auf diese Weise ist es zum Beispiel möglich, das Kulissenelement als ein separat montierbares Bauteil aus Kunststoff herzustellen.

Mit einer weiteren Ausgestaltung wird vorgeschlagen, dass an dem Kulissenelement des Wälzlagerkäfigs in Umfangsrichtung begrenzende Anschläge ausgebildet sind. Vorzugsweise befinden sich die Anschläge an Querwänden des Kulissenelements.

Mit einer weiteren Ausgestaltung wird vorgeschlagen, dass das Kulissenelement und die Lagerschale längs ihrer beiden Seitenränder mit Führungen versehen sind, welche das Kulissenelement und die Lagerschale für eine Bewegung in Umfangsrichtung gegenseitig führen und radial zusammenhalten. Auf diese Weise kann es beim Montieren der Lagerung auf dem Drehhebel, aber auch bei der anschließenden Handhabung des Drehhebels nicht zu einem ungewollten radialen Lösen der Lagerschale kommen, weshalb auch diese Ausgestaltung zur Montagefreundlichkeit der Lagerung beiträgt.

Gemäß einer weiteren Ausgestaltung befindet sich die zweite der beiden Wälzflächen an einer an dem anderen Druckstück abgestützten und befestigten Lagerschale, und das Kulissenelement und die Lagerschale sind längs ihrer beiden Seitenränder mit gegenseitigen Führungen versehen. Ferner kann die Lagerschale mit nach radial innen gerichteten Flanschen versehen sein, an denen zu dem Kulissenelement hin Nasen vorspringen, wobei die Nasen eine Stufe am jeweiligen Seitenrand des Kulissenelements hintergreifen, und so einen Formschluss in radialer Richtung bewirken.

Mit einer weiteren Ausgestaltung wird vorgeschlagen, dass das Kulissenelement und/oder die Lagerschale mit Anschlägen versehen sind, welche deren gegenseitigen Bewegungsweg in Umfangsrichtung begrenzen.

Wenn das Kulissenelement am Drehhebel fixiert ist und daher keine Relativbewegung gegenüber dem Drehhebel ausführt, ist es auch denkbar, die Führungs- und Funktionselemente des Kulissenelements, welche den Wälzlagerkäfig nur in Krümmungsrichtung beweglich am Drehhebel halten, einstückig am Drehhebel auszubilden.

Im Folgenden werden mehrere Ausführungsbeispiele der Erfindung, aus denen sich zudem weitere Einzelheiten und Vorteile ergeben, anhand der Zeichnungen beschrieben. Darin zeigen:
- Fig. 1: in einer vereinfachten Schnittdarstellung eine Scheibenbremse einschließlich einer aus einem ersten Druckstück in Gestalt eines Drehhebels, einer Wälzlagerung und einem zweiten Druckstück bestehenden Übertragungseinrichtung für die Zuspannkraft;
- Fig. 2: in einer perspektivischen Darstellung das als Drehhebel gestaltete erste Druckstück einschließlich der daran montierten Elemente der Lagerung;
- Fig. 3: die Gegenstände nach Fig. 2 bei unbetätigtem Drehhebel, d. h. bei fehlender Zuspannung;
- Fig. 4: die Gegenstände nach Fig. 2 bei betätigtem Drehhebel, d. h. im Falle der Zuspannung;
- Fig. 5: einen Schnitt durch die Lagerung quer zur Umfangsrichtung, und ohne Darstellung des Drehhebels;
- Fig. 6: eine vergrößerte Teildarstellung der Einzelheit VI in Fig. 5;
- Fig. 7: einen Schnitt durch eine Lagerschale der Lagerung;
- Fig. 8: eine perspektivische Ansicht der Lagerschale;
- Fig. 9: einen Schnitt durch ein Kulissenelement der Lagerung;
- Fig. 10: eine perspektivische Ansicht des Kulissenelements;
- Fig. 11: in einer zweiten Ausführungsform ein Kulissenelement der Lagerung;
- Fig. 12: eine perspektivische Ansicht der zweiten Ausführungsform des Kulissenelements;
- Fig. 13A: eine weitere Ausführungsformen des Aufbaus des Kulissenelements;
- Fig. 13B: eine weitere Ausführungsformen des Aufbaus des Kulissenelements;
- Fig. 13C: eine weitere Ausführungsformen des Aufbaus des Kulissenelements;
- Fig. 13D: eine weitere Ausführungsformen des Aufbaus des Kulissenelements;
- Fig. 14: eine Ausführungsform, bei der das Kulissenelement einstückig an dem Drehhebel ausgebildet ist;
- Fig. 15: zu Fig. 14 einen Schnitt durch den Drehhebel entsprechend Schnittlinie XV-XV in Fig. 14;
- Fig. 16: in einem Detail zu Fig. 14 eine Ansicht des Wälzlagerkäfigs;
- Fig. 17: eine Ausführungsform, bei der das Kulissenelement nicht an dem Drehhebel, sondern an dem gegenüberliegenden Druckstück einstückig ausgebildet ist;
- Fig. 18: zu Fig. 17 einen Schnitt durch das Druckstück entsprechend Schnittlinie XVIII-XVIII in Fig. 17 und
- Fig. 19: in einem Detail zu Fig. 17 eine Ansicht des Wälzlagerkäfigs.

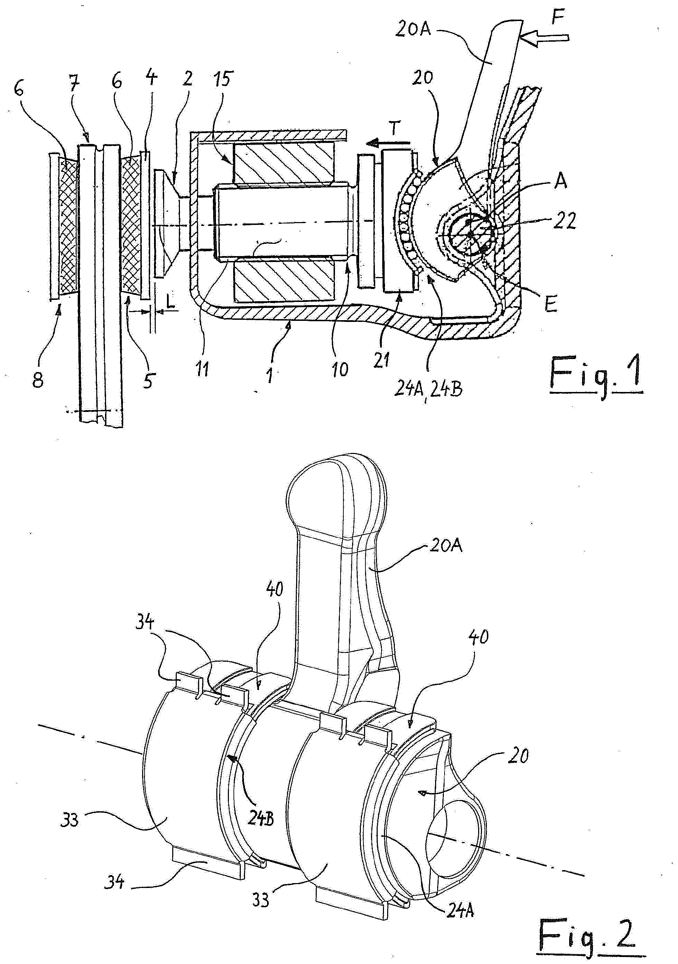

Die Fig. 1 zeigt eine druckluftbetriebene Fahrzeug-Scheibenbremse vom Schwimmsattel-Bautyp. In einem zugleich den Bremssattel bildenden Bremsgehäuse 1 der Scheibenbremse sind zwei parallele Druckstempel 2 beweglich geführt. Bei Betätigung der Bremse legen sich die Druckstempel 2 nach Überwindung eines Luftspiels L mit ihrer erweiterten Stempelplatte gegen die Rückseite einer Belagplatte 4 eines inneren Bremsbelags 5 an, und drücken so den Reibbelag 6 gegen die rotierende Bremsscheibe 7. Rückwärtig wird die Reaktionskraft über den Bremssattel 1 auf den äußeren Bremsbelag 8 übertragen. Durch die sich zwischen den zwei Reibbelägen 6 und der Bremsscheibe 7 einstellende Reibkraft wird das Fahrzeug abgebremst.

Zum Ausgleich des sich im Betrieb einstellenden Belagverschleißes ist eine Nachstelleinrichtung vorgesehen. Diese befindet sich innerhalb eines spindelförmigen, mit einem Außengewinde 11 versehenen Nachstellelements 10. Das Außengewinde 11 greift in ein entsprechendes Innengewinde 12 einer Traverse 15. Die Traverse 15 ist als Joch gestaltet, das sich parallel zur Ebene der Bremsscheibe 7 erstreckt. Mittig in der Traverse 15 befindet sich das Innengewinde 12, und an den Enden der Traverse 15 ist jeweils ein Druckstempel 2 befestigt. Bei der dargestellten Scheibenbremse handelt es sich daher um eine Doppelstempel-Bremse.

Die Reibkraft zwischen der Bremsscheibe 7 und den Bremsbelägen 5, 8 und damit die Verzögerung des Fahrzeugs ist abhängig von der Zuspannkraft. Zur Übertragung der von einem Bremszylinder, beispielsweise einem druckluftbetätigten Bremszylinder, erzeugten Zuspannkraft dient die im rechten Teil des Bremsgehäuses 1 dargestellte Kraftübertragungseinrichtung. Diese besteht aus einem ein erstes Druckstück 20 bildenden, im Bremsgehäuse schwenkbeweglich gelagerten Drehhebel, einem im Bremsgehäuse 1 zur Bremsscheibe 7 hin und von dieser weg beweglichen zweiten Druckstück 21, sowie einer dazwischen angeordneten Wälzlagerung.

Die beiden Druckstücke 20, 21 sind einander zugewandt komplementär teilzylindrisch gestaltet, d.h. als Halbschalen mit derselben Radienmittelpunktsachse A. Vorzugsweise ist, wie auf allen Figuren wiedergegeben, das als Drehhebel ausgebildete Druckstück 20 im Bereich der gegenseitigen Lagerung konvex-teilzylindrisch, und das andere Druckstück 21 im Bereich der gegenseitigen Lagerung konkav-teilzylindrisch gestaltet.

An dem Druckstück 20 ist ein verlängerter Hebelarm 20A ausgebildet. An dem Hebelarm 20A stützt sich ein hier nur anhand der Kraft F symbolisiertes Kraftglied ab. Als Kraftglied kann z. B. ein Bremszylinder dienen. Das Druckstück 20 mit dem Hebelarm 20A ist um eine gehäusefest angeordnete Achse E schwenkbeweglich gegen das Bremsgehäuse 1 abgestützt.

Bei Betätigung des als Kraftglied dienenden, druckluftbetriebenen Bremszylinders bewegt sich dessen Betätigungsstange in Richtung der Kraft F, wodurch der Drehhebel 20 um die Achse E in Richtung zu der Bremsscheibe 7 schwenkt. Diese Schwenkbewegung führt, da die Kreismittelpunktsachse A der Wälzlagerung exzentrisch zu der Achse E liegt, über die Wälzlagerung zu einer Bewegung T des anderen Druckstücks 21 mit der Folge, dass es über die weiteren im Kraftfluss angeordneten Bauteile zum Anpressen der Bremsbeläge 5, 8 gegen die Bremsscheibe 7 kommt.

Der Drehhebel 20 ist im Bereich seines drehbar gelagerten Endes als eine teilzylindrische Zuspannwelle gestaltet, die auf einem gegen das Bremsgehäuse 1 abgestützten Lagerbolzen 22 um die Achse E drehbar gelagert ist. Die Zuspannwelle befindet sich symmetrisch zu beiden Seiten des Hebelarms 20A des Drehhebels 20. Auf beiden Seiten der Schwenkebene des Hebelarms 20A ist also jeweils eine Wälzlagerung 24A, 24B zur Verbindung mit dem anderen Druckstück 21 angeordnet.

Gemäß den Fign. 2 bis 4 weist das als Drehhebel ausgebildete erste Druckstück 20 zumindest im Bereich der beiden Wälzlagerungen 24A und 24B zu dem anderen Druckstück 21 hin eine konvexe, teilzylindrische Außenfläche 25 auf, die bezogen die Bezugsachse A den Kreisradius R aufweist. Entsprechend weist das radial gegenüberliegend angeordnete andere Druckstück 21 eine konkave, teilzylindrische Ausnehmung mit einem etwas größeren Kreisradius zu der Bezugsachse A auf.

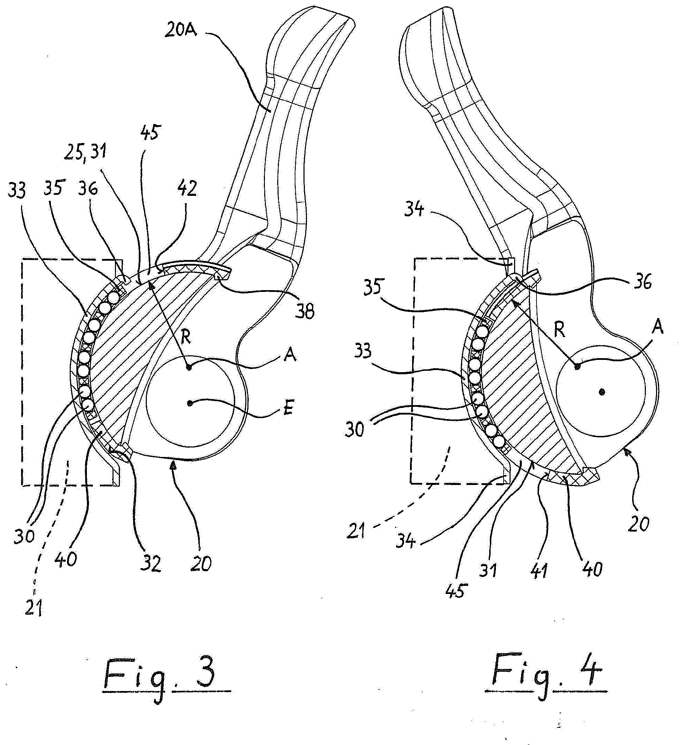

Anhand der Figuren 3 - 10 wird im Folgenden die Lagerung des Drehhebels 20 gegenüber dem Druckstück 21 bzw. gegenüber der Lagerschale 33 des Druckstücks 21 in ihren Einzelheiten beschrieben. Der Aufbau der beiden Wälzlagerungen 24A, 24B ist derselbe, zudem sind beide in ihren Radien R auf dieselbe Achse A bezogen.

Jede Wälzlagerung 24A, 24B setzt sich aus einer Lagerschale 33, einem Wälzlagerkäfig 35 mit darin einzeln oder gruppenweise angeordneten Wälzkörpern 30 und einem Kulissenelement 40 zusammen. Der Wälzlagerkäfig 35 ist beweglich sowohl gegenüber dem Drehhebel 20, als auch gegenüber dem Druckstück 21. Bestandteil der Lagerung ist auch die teilzylindrische Außenfläche 25 des Drehhebels 20. Diese bildet die innere Wälzfläche 31, auf der die Wälzkörper 30 unmittelbar, d. h. in direktem Kontakt, abrollen.

Die andere, äußere Wälzfläche 32 für das unmittelbare Abrollen der Wälzkörper 30 befindet sich hier an der Innenseite der äußeren Lagerschale 33. Die Wälzfläche 32 kann, je nach Bauart der Bremse, auch eine entsprechend gekrümmte Fläche innen an dem Bremsgehäuse 1 sein, oder die Wälzfläche 32 ist unmittelbar an dem Druckstück 21 angeformt.

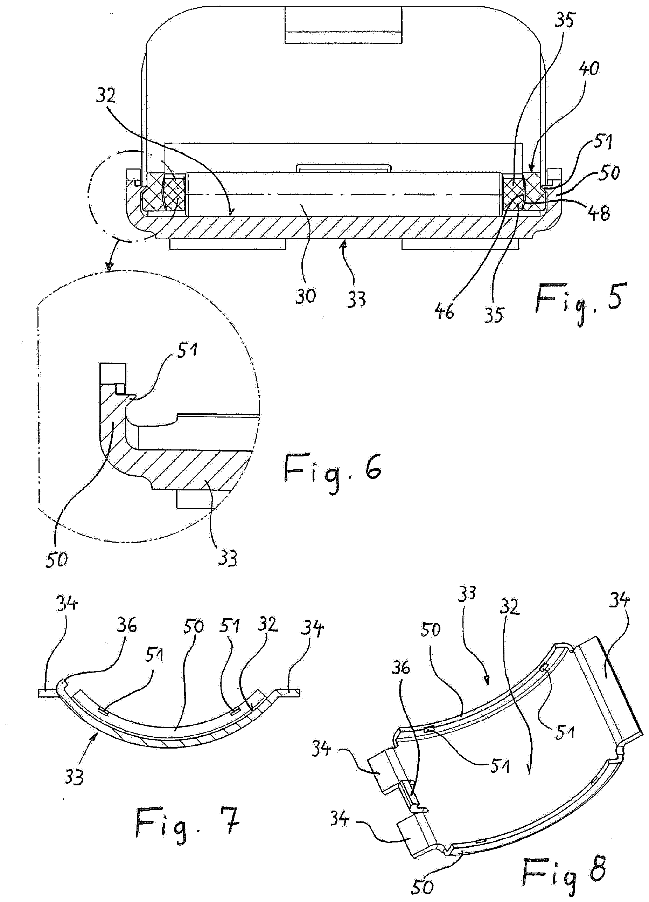

Die Lagerschale 33 ist an ihren umfangsseitigen Enden einstückig mit abgewinkelt gestalteten Laschen 34 (Fig. 2, Fig. 4) versehen, die sich gegen entsprechende Flächen oder Absätze an dem Druckstück 21 abstützen, um so die Lagerschale 33 sowohl in Umfangsrichtung, als auch seitlich an dem Druckstück 21 positionieren. Vorzugsweise besteht die Lagerschale 33 aus einem gestanzten Stahlblech, welches in einem Umformprozess die in den Fign. 7 und 8 wiedergegebene Gestalt einschließlich der positionierenden Laschen 34 erhält.

Die Lagerschale 33 ist an ihrem dem Hebelarm 20A näheren Ende mit einem Mitnehmer 36 in Gestalt einer zu der inneren Wälzfläche 31 hin gerichteten Abwinklung versehen. Der Mitnehmer 36 sorgt durch Mitnahme des Wälzlagerkäfigs 35 dafür, dass der Wälzlagerkäfig 35 in der in Fig. 3 wiedergegebenen Ausgangsstellung des Drehhebels 20 seine eine Endstellung einnimmt.

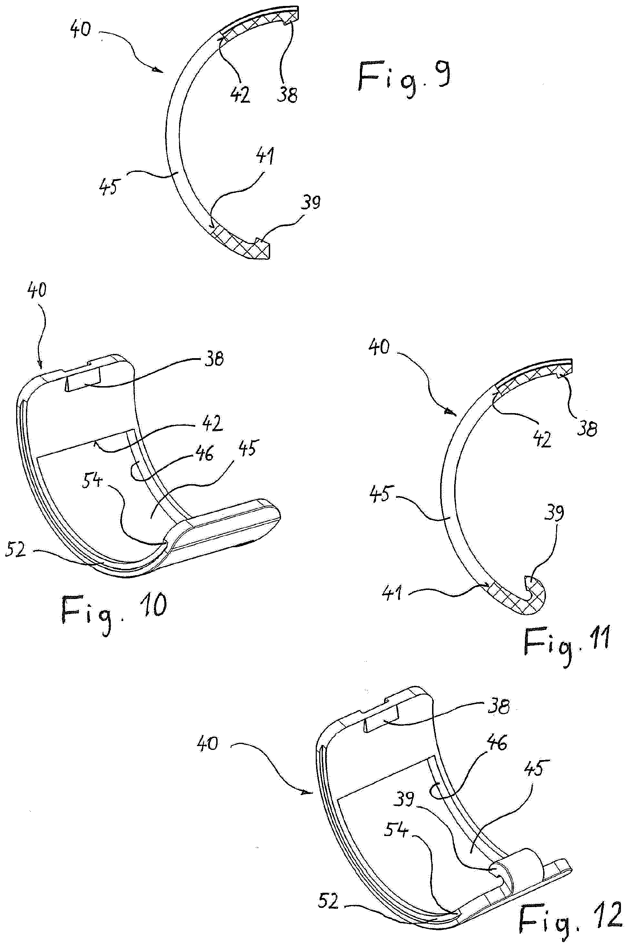

Das in den Fign. 9 und 10 als einzelnes, separates Bauteil wiedergegebene Kulissenelement 40 ist so an der Wälzfläche 31 befestigbar, dass es in Umfangsrichtung unbeweglich gegenüber der Wälzfläche 31 ist. Zur unverrückbaren, aber lösbaren Befestigung auf dem Drehhebel 20 kann das Kulissenelement 40 an seinen beiden umfangsseitigen Enden mit jeweils mindestens einem nach radial innen vorspringenden Halteelement 38 bzw. 39 versehen sein. Vorzugsweise besteht das Kulissenelement 40 einschließlich der einstückig angeformten Halteelemente 38, 39 aus Kunststoff. Die Halteelemente 38, 39 lassen sich hinter Rücksprüngen an dem Drehhebel verriegeln. Diese Rücksprünge sind beim Ausführungsbeispiel die Enden der teilzylindrischen Außenfläche 25. Das Kulissenelement 40 ist also bei dieser Ausführungsform an dem Drehhebel 20 verklipsbar.

Die Fign. 11 und 12 zeigen eine gegenüber den Fign. 9 und 10 abgewandelte Ausführungsform des Kulissenelements 40. Bei dieser Ausführungsform ist das eine Halteelement 39 als eine um mehr als 90° gebogene Lasche geformt. Diese weist eine eigene Flexibilität auf, was die Montage des Kulissenelements 40 auf dem Drehhebel erleichtert.

Das Kulissenelement 40 ist ebenso wie die übrigen Hauptbestandteile der Lagerung kreisbogenförmig mit Bezug auf die Achse A gestaltet. Seine radial innere Seite folgt in etwa der Krümmungskontur der Wälzfläche 31 an dem Drehhebel, und seine radial äußere Seite folgt in etwa der Krümmungskontur der äußeren Wälzfläche 32.

Das Kulissenelement 40 umschließt rahmenartig einen Kulissenraum 45, der an seinen Längsseiten durch Führungen 46, und in Umfangsrichtung durch Querwände 41, 42 begrenzt ist. Diese Querwände sind zugleich Anschläge 41, 42, welche den Bewegungsweg des Wälzlagerkäfigs 35 in Umfangsrichtung begrenzen können.

In dem Kulissenraum 45 ist, mit demselben Krümmungsverlauf, der Wälzlagerkäfig 35 mit den darin aufgenommenen Wälzkörpern 30 angeordnet. Die in Umfangsrichtung gemessene Länge des Kulissenraums 45 ist größer, als die in Umfangsrichtung gemessene Länge des Wälzlagerkäfigs 35.

Die Fign. 3 und 4 illustrieren die durch den Mitnehmer 36 in Verbindung mit den Anschlägen 41, 42 erzielte Wegbegrenzung für den Wälzlagerkäfig 35. Die Fig. 3 zeigt den unbetätigten Drehhebel, wobei der Wälzlagerkäfig 35 mittels des Mitnehmers 36 in einer Lage in dem Kulissenelement 40 gehalten wird, bei der der Wälzlagerkäfig an dem Anschlag 41 anliegt, oder sich in dessen Nähe befindet. Dies ist die Ausgangsposition des Wälzlagerkäfigs. Bei Fig. 4 hingegen, d. h. bei maximaler Zuspannsituation, befindet sich der Wälzlagerkäfig 35 in seiner Endposition am anderen Ende des Kulissenraums 45, wo er entweder an dem anderen Anschlag 42 anliegt, oder sich in dessen Nähe befindet.

Da der Kulissenraum 45 des Kulissenelements 40 sowohl nach radial innen als auch nach radial außen offen ist, laufen die einzelnen Wälzkörper 30 einerseits unmittelbar an der inneren Wälzfläche 31 an dem Drehhebel 20, und andererseits an der äußeren Wälzfläche 32 ab. Das Kulissenelement 40 selbst liegt nicht im Kraftfluss, d. h. an ihm stützen sich die druckbelasteten Wälzkörper 30 der Lagerung nicht ab.

Die Führung des Wälzlagerkäfigs 35 bei dessen Bewegung in Umfangsrichtung erfolgt durch die beiden Führungen 46 an dem Kulissenelement 40, welche den Kulissenraum 45 seitlich begrenzen. Wie insbesondere die Querschnittsdarstellung Fig. 5 erkennen lässt, weisen die Führungen 46 jeweils einen konkaven Querschnitt auf, wohingegen der jeweils korrespondierende Querschnitt an den Längsrändern 48 des Wälzlagerkäfigs 35 konvex ist.

Diese Form der in Umfangsrichtung aneinander entlang gleitenden Führungsflächen führt zu einem zusätzlichen Effekt, nämlich dass sich der Wälzlagerkäfig 35 nicht radial aus dem Kulissenraum 45 lösen kann, insbesondere nicht aus diesem herausfallen kann. Erzielt wird dies durch einen Formschluss, indem das Kulissenelement 40 durch die Gestaltung seiner Führungen 46 die Längsränder 48 des Wälzlagerkäfigs 35 von radial außen her übergreift. Bei Fig. 5 wird dies konkret erreicht, indem die Öffnungsweite der Führungen 46 wegen deren konkaver und daher nach außen hin etwas eingezogener Gestaltung geringer ist, als die größte Breite des Wälzlagerkäfigs 35.

Der so erzielte Formschluss erleichtert beträchtlich die Montierbarkeit der Lagerung, da diese bei der Montage nicht in ihre Einzelteile zerfallen kann. Die Montierbarkeit wird noch verbessert, wenn die Lagerschale 33 durch Übergreifen mit dem Kulissenelement 40 verbunden ist, sich also auch die Lagerschale 33 nicht radial von dem Kulissenelement lösen kann. Zu diesem Zweck ist, wie vor allem die Fign. 5 - 8 erkennen lassen, die Lagerschale 33 längs ihrer beiden Seitenränder mit nach radial innen gerichteten Flanschen 50 versehen, so dass sie das Kulissenelement 40 seitlich übergreift. Von den Flanschen 50 stehen zu dem Kulissenelement 40 hin Nasen 51 vor. Diese hintergreifen eine Stufe 52 am jeweiligen Seitenrand des Kulissenelements 40, so dass die Lagerschale 33 radial mit dem Kulissenelement 40 verbunden ist.

Die Stufe 52 am Seitenrand des Kulissenelements 40 ist, wie insbesondere Fig. 10 und Fig. 12 erkennen lässt, nicht durchgehend über die gesamte Umfangslänge des Kulissenelements 40, sondern ihre Länge ist zumindest in die eine Umfangsrichtung begrenzt. Diese Längsbegrenzung 54 blockiert, sobald die entsprechende Nase 51 an sie stößt, die weitere Umfangsbewegung der Lagerschale 33 relativ zum Kulissenelement 40.

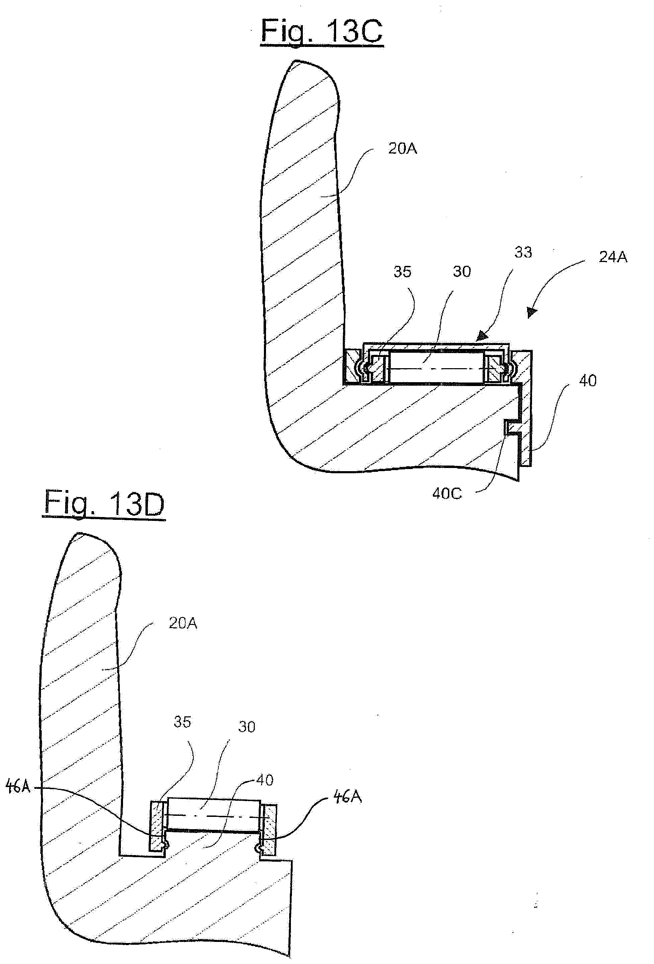

Die bisher beschriebenen Ausführungsbeispiele zeigen eine unmittelbare Führung des Wälzlagerkäfigs durch das Kulissenelement. Gemäß Fig. 13C ist aber ebenso möglich, dass das Kulissenelement 40 die Lagerschale 33 innen in seinem Kulissenraum aufnimmt und die Lagerschale 33 ihrerseits den Wälzlagerkäfig 35 führt. Bei dieser Ausführungsform führt daher das Kulissenelement 40 den Wälzlagerkäfig 35 nicht unmittelbar, sondern nur mittelbar.

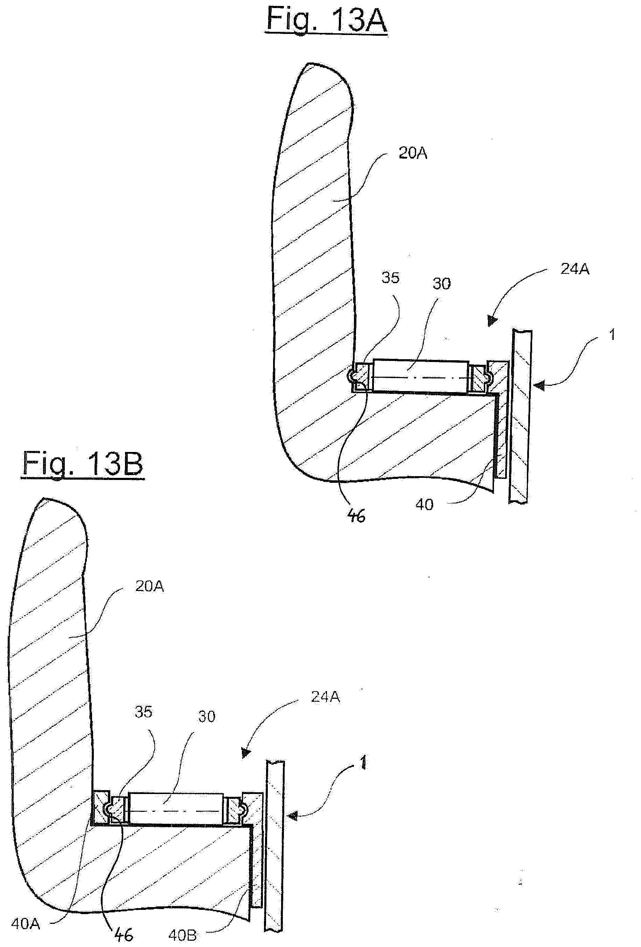

Fig. 13A zeigt eine Ausführungsform, bei der die Aufnahme und die Führung des Wälzlagerkäfigs 35 einerseits über ein seitlich auf den Hebel 20 aufgeschobenes Kulissenelement 40, und andererseits durch eine Kulisse erfolgt, bei der es sich um eine Kontur wie z.B. eine Nut im Material des Drehhebels 20 handelt. Das Kulissenelement 40 umgreift dabei ähnlich der Halteelemente 38, 39 (Fig. 9) die Enden der teilzylindrischen Flächen 25 des Drehhebels. Der Abstand zur benachbarten Wand des Bremsgehäuses kann dabei so gewählt sein, dass im montierten Zustand ein axiales Abrutschen verhindert wird.

Der Aufbau des Lagers in Figur 13B unterscheidet sich zum Lager in Figur 13A durch ein separates Bauteil 40A, welches als der eine Teil des Kulissenelements den Wälzlagerkäfig 35 auf dieser Seite führt. Das Kulissenelement 40 ist also zweiteilig, wobei dessen zwei Teilelemente 40A, 40B an ihren Enden durch Ineinanderstecken verbunden sein können.

Figur 13C zeigt eine Variante, bei der Flansche 50 der Lagerschale 33 in den Kulissenraum 45 ragen und so mit in diesem aufgenommen sind. Der Wälzlagerkäfig 35 wird in diesem Fall nur mittelbar über die Lagerschale 33 bzw. deren Flansche 50 durch das Kulissenelement 40 geführt. Das Kulissenelement 40 ist in dieser Ausführung durch eine in ein seitliches Sackloch des Drehhebels eingepresste Befestigungsnase 40C auf dem Drehhebel 20 fixiert.

In Figur 13D ist ein an dem Drehhebel 20 einstückig angeformtes Kulissenelement 40 dargestellt. Dieses ist als ein Damm gestaltet, dessen Oberseite die gekrümmte Lauffläche für die Wälzkörper bildet, und dessen beiden Flanken als Führungen 46A für den Wälzlagerkäfig 35 gestaltet sind und so die Funktions- bzw. Halteelemente für den Wälzlagerkäfig 35 sind.

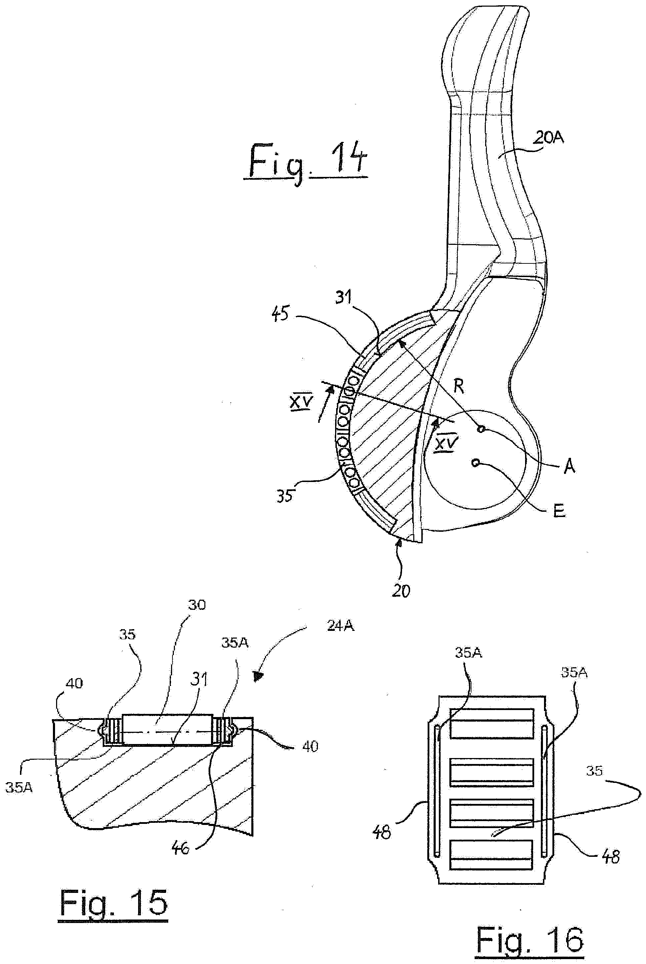

Bei der Ausführungsform nach den Fign. 14 - 16 ist das Kulissenelement 40 ebenfalls einstückig an dem Drehhebel 20 angeformt. Für jede der beiden Wälzlagerungen 24A, 24B ist der Drehhebel 20 mit einem in Umfangsrichtung verlaufenden Kanal versehen, der den Kulissenraum 45 bildet. Der Boden des Kanals bildet die innere Wälzfläche 31, und die Seitenwände des Kanals übernehmen die Führung und formschlüssige Sicherung des in dem Kanal laufenden Wälzlagerkäfigs 35. Diese Führungen 46 weisen Vorsprünge auf, durch die der Wälzlagerkäfig 35 an seinen Längsrändern 48 von außen her etwas übergriffen wird, so dass er nicht radial aus dem Kanal herausfallen kann. Um für die Montage der Lagerung ein Einklipsen des Wälzlagerkäfigs 35 in den Kanal zu erleichtern, ist der Wälzlagerkäfig 35 entlang seiner Längsränder mit Schlitzen 35A versehen, die eine gewisse Materialnachgiebigkeit der Seitenflanken des Wälzlagerkäfigs 35 zulassen.

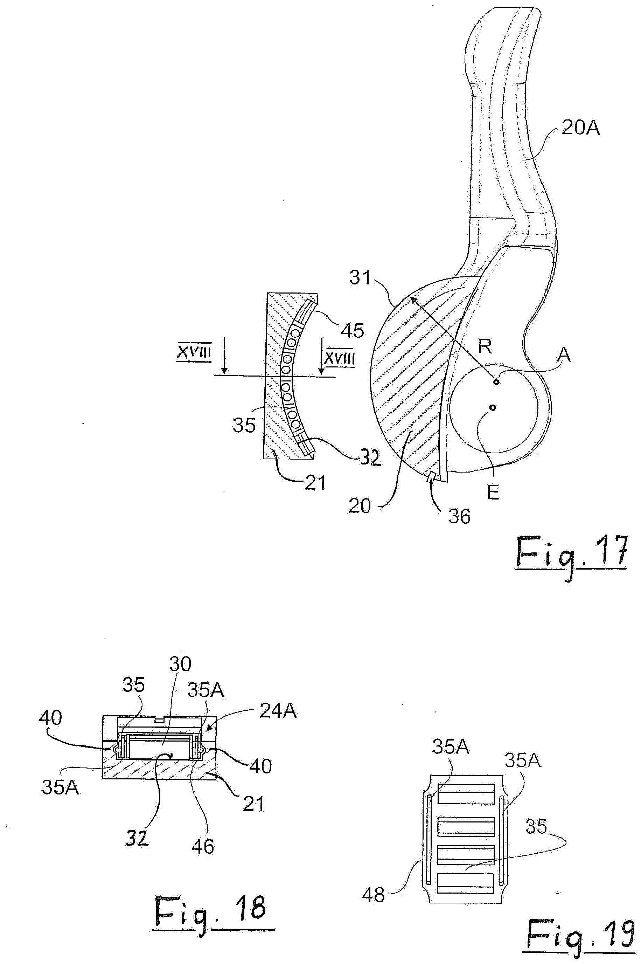

Bei der weiteren Ausführungsform nach den Fign. 17 - 19 befindet sich das Kulissenelement 40 nicht an dem das erste Druckstück bildenden Drehhebel, sondern an dem zweiten Druckstück 21. Das Kulissenelement 40 ist dort einstückig angeformt. Für jede der beiden Wälzlagerungen 24A, 24B ist das Druckstück 21 mit einem in Umfangsrichtung verlaufenden Kanal versehen, der den Kulissenraum 45 bildet. Der Boden des Kanals bildet die äußere Wälzfläche 32, und die Seitenwände des Kanals übernehmen die Führung und formschlüssige Sicherung des in dem Kanal laufenden Wälzlagerkäfigs 35. Diese Führungen 46 weisen Vorsprünge auf, durch die der Wälzlagerkäfig 35 an seinen Längsrändern 48 von außen her etwas übergriffen wird, so dass er nicht radial aus dem Kanal herausfallen kann. Um für die Montage der Lagerung das Einklipsen des Wälzlagerkäfigs 35 in den Kanal zu erleichtern, ist der Wälzlagerkäfig 35 entlang seiner Längsränder mit Schlitzen 35A versehen, die nach innen hin eine gewisse Materialnachgiebigkeit der Seitenflanken des Wälzlagerkäfigs 35 zulassen. Der Mitnehmer 36 für die Ausgangspositionierung des Wälzlagerkäfigs 35 ist bei dieser Ausführungsform als Stift ausgebildet und befindet sich am Ende der Wälzfläche 31 am Drehhebel 20.

Bei der Ausführungsform nach den Fign. 17 - 19 kann alternativ auch eine Lagerschale vorhanden sein, welche auf die teilzylindrische Fläche 25 des Drehhebels 20 aufgeklipst wird, und an der sich dann die innere Wälzlagerfläche 31 für das Abrollen der Wälzkörper befindet. In diesem Fall befindet sich der Mitnehmer 36 direkt an dieser Lagerschale, vorzugsweise in Gestalt einer Abwinklung.

### Bezugszeichenliste

- 1: Bremsgehäuse, Bremssattel
- 2: Druckstempel
- 4: Belagplatte
- 5: Bremsbelag
- 6: Reibbelag
- 7: Bremsscheibe
- 8: Bremsbelag
- 11: Außengewinde
- 12: Innengewinde
- 15: Traverse
- 20: erstes Druckstück, Drehhebel
- 20A: Hebelarm
- 21: zweites Druckstück
- 22: Lagerbolzen
- 24A: Wälzlagerung
- 24B: Wälzlagerung
- 25: teilzylindrische Fläche
- 30: Wälzkörper
- 31: innere Wälzfläche
- 32: äußere Wälzfläche
- 33: Lagerschale
- 34: Lasche
- 35: Wälzlagerkäfig
- 35A: Schlitz
- 36: Mitnehmer
- 38: Halteelement
- 39: Halteelement
- 40: Kulissenelement
- 40A: erster Teil
- 40B: zweites Teil
- 40C: Befestigungsnase
- 41: Anschlag
- 42: Anschlag
- 45: Kulissenraum
- 46: Führung
- 46A: Führung
- 48: Längsrand
- 50: Flansch
- 51: Nase
- 52: Stufe
- 54: Längsbegrenzung

- A: Achse
- E: Achse
- F: Kraft
- L: Lüftspiel
- R: Kreisradius
- T: Bewegung

## Patentansprüche

1. Übertragungseinrichtung einer Scheibenbremse bestehend aus einem ersten Druckstück (20) in Gestalt eines eine teilzylindrische Fläche (25) und einen verlängerten Hebelarm (20A) aufweisenden Drehhebels, einem ebenfalls teilzylindrischen zweiten Druckstück (21) und einer Wälzlagerung für die gegenseitige Abstützung der zwei Druckstücke (20, 21), wobei kreisbogenförmig gekrümmte, einander unter Zwischenlage von Wälzkörpern (30) radial gegenüberliegende innere und äußere Wälzflächen (31, 32) vorgesehen sind, an denen die Wälzkörper (30) ablaufen, wobei die eine Wälzfläche (31) die teilzylindrische Fläche (25) des Drehhebels (20) ist, wobei die Wälzkörper (30) einzeln oder gruppenweise in einem beweglich gegenüber den Druckstücken (20, 21) angeordneten Wälzlagerkäfig (35) zusammengefasst sind, **gekennzeichnet durch** ein Kulissenelement (40), welches
- an dem Drehhebel (20) angeordnet ist,
- mit Halteelementen (38, 39) zur lösbaren Befestigung an dem Drehhebel (20) versehen ist,
- den Wälzlagerkäfig (35) in Umfangsrichtung mittelbar oder unmittelbar führt, und von außen her übergreift.

2. Übertragungseinrichtung nach Anspruch 1, **dadurch gekennzeichnet, dass** das Übergreifen des Wälzlagerkäfigs (35) durch die an dem Kulissenelement (40) ausgebildeten Führungen (46, 46A) erfolgt.

3. Übertragungseinrichtung nach Anspruch 2, **dadurch gekennzeichnet, dass** die Führungen (46, 46A) einen konkaven Querschnitt aufweisen, und der jeweils korrespondierende Querschnitt an den Längsrändern (48) des Wälzlagerkäfigs (35) konvex ist.

4. Übertragungseinrichtung nach einem der vorangehenden Ansprüche, **dadurch gekennzeichnet, dass** das Kulissenelement (40) zur Aufnahme des Wälzlagerkäfigs (35) einen kreisbogenförmig gekrümmten, radial offenen Kulissenraum (45) aufweist, der zu beiden Seiten hin durch die Führungen (46, 46A) begrenzt ist.

5. Übertragungseinrichtung nach einem der vorangehenden Ansprüche, **dadurch gekennzeichnet, dass** sich keine Wälzkörper (30) an dem Kulissenelement (40) abstützen.

6. Übertragungseinrichtung nach einem der vorangehenden Ansprüche, **dadurch gekennzeichnet, dass** an dem Kulissenelement (40) den Bewegungsweg des Wälzlagerkäfigs (35) in Umfangsrichtung begrenzende Anschläge (41, 42) ausgebildet sind.

7. Übertragungseinrichtung nach Anspruch 6, **dadurch gekennzeichnet, dass** sich die Anschläge (41, 42) an Querwänden des Kulissenelements (40) befinden.

8. Übertragungseinrichtung nach einem der vorangehenden Ansprüche, **dadurch gekennzeichnet, dass** sich die andere Wälzfläche (32) unmittelbar an dem anderen Druckstück (21), einer daran abgestützten Lagerschale (33) oder an einem Bremssattelgehäuse (1) befindet.

9. Übertragungseinrichtung nach Anspruch 1, **dadurch gekennzeichnet, dass** das Kulissenelement (40) und die Lagerschale (33) längs ihrer beiden Seitenränder mit Führungen versehen sind, welche das Kulissenelement (40) und die Lagerschale (33) gegenseitig für eine Bewegung in Umfangsrichtung führen, und radial zusammenhalten.

10. Übertragungseinrichtung nach Anspruch 9, **dadurch gekennzeichnet, dass** die Lagerschale (33) längs ihrer beiden Seitenränder mit nach radial innen gerichteten Flanschen (50) versehen ist, an denen zu dem Kulissenelement (40) hin Nasen (51) vorspringen, wobei die Nasen (51) eine Stufe (52) am jeweiligen Seitenrand des Kulissenelements (40) hintergreifen.

11. Übertragungseinrichtung nach Anspruch 9 oder 10, **dadurch gekennzeichnet, dass** das Kulissenelement (40) und/oder die Lagerschale (33) mit Anschlägen (54) versehen sind, welche deren gegenseitigen Bewegungsweg in Umfangsrichtung begrenzen.

12. Übertragungseinrichtung nach Anspruch 1, **dadurch gekennzeichnet, dass** die Halteelemente (38, 39) einstückig an den umfangsseitigen Enden des Kulissenelements (40) angeformte Rastnasen sind, die Rücksprünge hintergreifen, die sich in Umfangsrichtung an die innere Wälzfläche (31) anschließen.

13. Übertragungseinrichtung nach einem der vorangehenden Ansprüche, **dadurch gekennzeichnet, dass** das Kulissenelement (40) aus Kunststoff besteht.

## Claims

1. A transmission device of a disc brake, consisting of a first pressure piece (20) in the form of a semi-cylindrical surface (25) and a rotary lever having an extended lever arm (28), an also semi-cylindrical second pressure piece (21) and a roller bearing for the mutual support of said two pressure pieces (20, 21), wherein inner and outer roller surfaces (31, 32) are provided, which are arcuately curved and located radially opposite each other with rolling elements (30) interposed therebetween, on which rolling surfaces the rolling elements (30) roll off, wherein one rolling surface (31) is the semi-cylindrical surface (25) of the rotary lever (20), wherein the rolling elements (30) are combined either individually or in groups in a rolling bearing cage (35) arranged so as to be movable relative to the pressure pieces (20, 21), **characterised by** a sliding guide element (40) which
- is provided on the rotary lever (20),
- is provided with holding elements (38, 39) for detachably fixing it to the rotary lever (20),
- directly or indirectly guides the rolling bearing cage (35) in the circumferential direction and overlaps it from the outside.

2. The transmission device as claimed in claim 1, **characterised in that** the overlapping of the rolling bearing cage (35) is realised by the guides (46, 46A) provided on the sliding guide element (40).

3. The transmission device as claimed in claim 2, **characterised in that** the guides (46, 46A) have a concave cross-section and the respectively corresponding cross-section is convex along the longitudinal edges (48) of the roller bearing cage (35).

4. The transmission device as claimed in any one of the preceding claims, **characterised in that** the sliding guide element (40) has, for receiving the roller bearing cage (35), an arcuately curved, radially open sliding guide space (45) that is limited on both sides by the guides (46, 46A).

5. The transmission device as claimed in any one of the preceding claims, **characterised in that** no roller elements (30) are supported on the sliding guide element (40).

6. The transmission device as claimed in any one of the preceding claims, **characterised in that** stops (41, 42) are provided on the sliding guide element (40), which delimit the travel path of the roller bearing cage (35) in the circumferential direction.

7. The transmission device as claimed in claim 6, **characterised in that** the stops (41, 42) are located on transverse walls of the sliding guide element (40).

8. The transmission device as claimed in any one of the preceding claims, **characterised in that** the other roller surface (32) is located directly on the other pressure piece (21), on a bearing shell (33) supported thereon or on a brake calliper housing (1).

9. The transmission device as claimed in claim 1, **characterised in that** the sliding guide element (40) and the bearing shell (33) are provided with guides along their two lateral edges, which guide the sliding guide element (40) and the bearing shell (33) relative to each other for a movement in the circumferential direction and hold them radially together.

10. The transmission device as claimed in claim 9, **characterised in that** the bearing shell (33) is provided, alongside its two lateral edges, with radially inwardly directly flanges (50), on which noses (51) protrude towards the sliding guide element (40), which noses (51) engage in a step (52) on the respective lateral edge of the sliding guide element (40).

11. The transmission device as claimed in claim 9 or 10, **characterised in that** the sliding guide element (40) and/or the bearing shell (33) are provided with stops (54) that delimit the travel path relative to each other in the circumferential direction.

12. The transmission device as claimed in claim 1, **characterised in that** the holding elements (38, 39) are detents integrally moulded onto the circumferential ends of the sliding guide element (40), which detents engage in recesses that are connected to the inner rolling surface (31) in the circumferential direction.

13. The transmission device as claimed in any one of the preceding claims, **characterised in that** the sliding guide element (40) is made from a plastics material.

## Revendications

1. Dispositif de transmission d'un frein à disque, comprenant une première pièce de pression (20) ayant la forme d'un levier rotatif pourvu d'une surface partiellement cylindrique (25) et d'un bras de levier prolongé (20A), une deuxième pièce de pression (21) également partiellement cylindrique et un moyen de montage sur palier à roulement destiné à supporter mutuellement les deux pièces de pression (20, 21), des surfaces de roulement intérieure et extérieure (31, 32) incurvées en arc de cercle et radialement opposées avec interposition d'éléments de roulement (30) étant prévues sur lesquelles roulent les éléments de roulement (30), la première surface de roulement (31) étant la surface partiellement cylindrique (25) du levier rotatif (20), les éléments de roulement (30) étant montés individuellement ou en groupes dans une cage de roulement (35) disposée de manière mobile par rapport aux pièces de pression (20, 21), **caractérisé par** un élément formant coulisse (40) qui
- est disposé au niveau du levier rotatif (20),
- est pourvu d'éléments de retenue (38, 39) destinés à être fixés de manière amovible au levier rotatif (20),
- guide la cage de roulement (35) directement ou indirectement dans la direction périphérique et s'engage par-dessus celle-ci depuis l'extérieur.

2. Dispositif de transmission selon la revendication 1, **caractérisé en ce que** l'engagement par-dessus la cage de roulement (35) est effectué par les guides (46, 46A) formés au niveau de l'élément formant coulisse (40) .

3. Dispositif de transmission selon la revendication 2, **caractérisé en ce que** les guides (46, 46A) ont une section transversale concave et **en ce que** la section transversale correspondante au niveau des bords longitudinaux (48) de la cage de roulement (35) est convexe.

4. Dispositif de transmission selon l'une des revendications précédentes, **caractérisé en ce que** l'élément formant coulisse (40) destiné à recevoir la cage de roulement (35) comporte un espace pour coulisse (45) incurvé en arc de cercle et radialement ouvert qui est délimité des deux côtés par les guides (46, 46A).

5. Dispositif de transmission selon l'une des revendications précédentes, **caractérisé en ce qu'**aucun élément de roulement (30) ne vient en appui sur l'élément formant coulisse (40).

6. Dispositif de transmission selon l'une des revendications précédentes, **caractérisé en ce que** des butées (41, 42) limitant le chemin de déplacement de la cage de roulement (35) dans la direction périphérique sont formées au niveau de l'élément formant coulisse (40) .

7. Dispositif de transmission selon la revendication 6, **caractérisé en ce que** les butées (41, 42) sont situées au niveau de parois transversales de l'élément formant coulisse (40).

8. Dispositif de transmission selon l'une des revendications précédentes, **caractérisé en ce que** l'autre surface de roulement (32) est située directement au niveau de l'autre pièce de pression (21), d'une coquille de support (33) supportée par celle-ci ou d'un boîtier d'étrier (1).

9. Dispositif de transmission selon la revendication 1, **caractérisé en ce que** l'élément formant coulisse (40) et la coquille de support (33) sont pourvus, le long de ses deux bords latéraux, de guides qui guident mutuellement l'élément formant coulisse (40) et la coquille de support (33) pour les déplacer dans la direction périphérique et les maintiennent radialement ensemble.

10. Dispositif de transmission selon la revendication 9, **caractérisé en ce que** la coquille de support (33) est pourvue, le long de ses deux bords latéraux, de brides (50) dirigées radialement vers l'intérieur au niveau desquelles des ergots (51) font saillie en direction de l'élément formant coulisse (40), les ergots (51) s'engageant derrière un gradin (52) au niveau du bord latéral respectif de l'élément formant coulisse (40).

11. Dispositif de transmission selon la revendication 9 ou 10, **caractérisé en ce que** l'élément formant coulisse (40) et/ou la coquille de support (33) sont pourvus de butées (54) qui limitent leur chemin de déplacement mutuel dans la direction périphérique.

12. Dispositif de transmission selon la revendication 1, **caractérisé en ce que** les éléments de retenue (38, 39) sont des ergots d'encliquetage qui sont formés d'une seule pièce au niveau des extrémités côté périphérie de l'élément formant coulisse (40) et qui s'engagent derrière des retraits qui se raccordent à la surface de roulement intérieure (31) dans la direction périphérique.

13. Dispositif de transmission selon l'une des revendications précédentes, **caractérisé en ce que** l'élément formant coulisse (40) est en matière synthétique.
